# EUROPEAN PATENT APPLICATION

(11) **EP 3 000 980 A2**
(43) Date of publication of application: **30.03.2016**
(21) Application number: 15187449.2
(22) Date of filing: 29.09.2015
(51) Int. Cl.: F01D 9/04, B23K 20/16, B23K 35/32, B23K 35/02, C23C 24/00, F01D 25/24, B23K 101/00

(54) **HYBRID GAMMA TIAL ALLOY COMPONENT**

(30) Priority: 29.09.2014 US 201462056908 P
(71) Applicant: United Technologies Corporation, Hartford, CT 06101 (US)
(72) Inventor: SUCIU, Gabriel L., Glastonbury, CT Connecticut 06033 (US); HILL, James D., Tolland, CT Connecticut 06084 (US)
(74) Representative: Hall, Matthew Benjamin

(57) **Abstract**

A hybrid component (52; 54) for a turbine engine (10) having a casing (48) includes a first part (100) of a gamma TiAl intermetallic alloy and a second part (102) of a material of at least one of nickel, a nickel base, a cobalt base, an iron base superalloy or mixtures thereof. The second part is coupled to and configured to attach the first part to the casing of the engine. The first and second parts are attached to each other by transient liquid phase (TLP) bonding.

## Description

### BACKGROUND

The present disclosure relates to the utilization of lightweight, high temperature intermetallic compound alloys in gas turbine engines.

The efficiency of high performance gas turbine engines increases as the temperature difference between the inlet and exhaust temperatures increases. As a result, engine designers are continually raising the combustion and exhaust gas temperature of such engines. In addition to increased operating temperatures, there is also a large incentive to decrease the weight of the rotating components as much as possible to increase the thrust to weight ratio of the engines, particularly for aerospace applications. Two phase gamma TiAl based intermetallic alloys have been considered as potential materials for high temperature aerospace and automotive applications. However, the relatively low ductility and fracture toughness of gamma TiAl intermetallic alloys prevents them from being used in applications where components are subjected to localized stress, impact, and vibration.

### SUMMARY

A hybrid component for a turbine engine having a casing includes a first part of a gamma TiAl intermetallic alloy and a second part of a material which includes nickel, a nickel base, a cobalt base, an iron base superalloy or mixtures thereof. The second part is coupled to and configured to attach the first part to the casing of the engine. In an embodiment, a hybrid component for a turbine engine includes an intermetallic alloy airfoil with at least one metal attachment feature.

In another embodiment, a method of forming a hybrid component for a turbine engine includes forming an intermetallic airfoil which includes gamma TiAl and forming a plurality of hooks which are then attached to the airfoil.

### BRIEF DESCRIPTION OF THE DRAWINGS

FIG. 1 illustrates a simplified cross sectional view of a gas turbine engine.
FIG. 2 is a view of a low pressure turbine vane in accordance with various embodiments of the present disclosure.
FIG. 3 is a perspective view of a hybrid vane in accordance with various embodiments of the present disclosure.
FIG. 4 is a perspective view of an alternative hybrid vane in accordance with various embodiments of the present disclosure.
FIG. 5A and FIG. 5B are perspective views of alternative hybrid vanes in accordance with various embodiments of the present disclosure.
FIG. 6 is an exemplary assembly process for a hybrid vane in accordance with various embodiments of the present disclosure.

### DETAILED DESCRIPTION

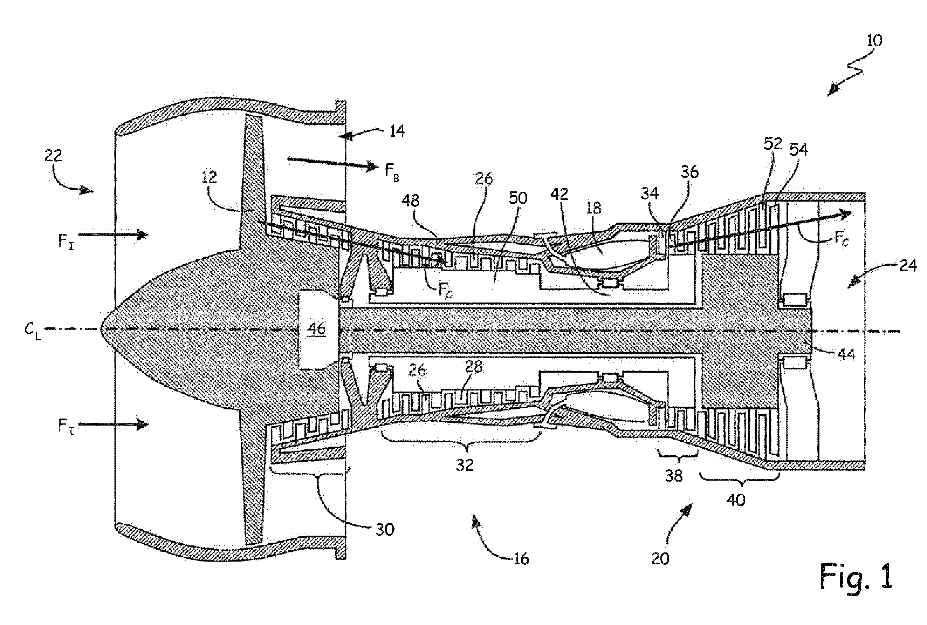

FIG. 1 is a cross-sectional view of a gas turbine engine 10, in a turbofan exemplary embodiment in accordance with the present disclosure. As shown in FIG. 1, turbine engine 10 comprises fan 12 positioned in bypass duct 14, with bypass duct 14 oriented about a turbine core comprising compressor (compressor section) 16, combustor (or combustors) 18 and turbine (turbine section) 20, arranged in flow series with upstream inlet 22 and downstream exhaust 24.

Compressor 16 comprises stages of compressor vanes 26 and blades 28 arranged in low pressure compressor (LPC) section 30 and high pressure compressor (HPC) section 32. Turbine 20 comprises stages of turbine vanes 34 and turbine blades 36 arranged in high pressure turbine (HPT) section 38 and low pressure turbine (LPT) section 40. HPT section 38 is coupled to HPC section 32 via HPT shaft 50, forming the high pressure spool or high spool. LPT section 40 is coupled to LPC section 30 and fan 12 via LPT shaft 44, forming the low pressure spool or low spool. HPT shaft 42 and LPT shaft 44 are typically coaxially mounted, with the high and low spools independently rotating about turbine axis (centerline) CL.

Fan 12 comprises a number of fan airfoils circumferentially arranged around a fan disk or other rotating member, which is coupled (directly or indirectly) to LPC section 30 and driven by LPT shaft 44. In some embodiments, fan 12 is coupled to the fan spool via geared fan drive mechanism 46, providing independent fan speed control.

As shown in FIG. 1, fan 12 is forward-mounted and provides thrust by accelerating flow downstream through bypass duct 14, for example in a high-bypass configuration suitable for commercial and regional jet aircraft operations. Alternatively, fan 12 is an unducted fan or propeller assembly, in either a forward or aft-mounted configuration. In these various embodiments, it will be appreciated that turbine engine 10 may comprise, for example, any of a high-bypass turbofan, a low-bypass turbofan, or a turboprop engine, and that the number of spools and shaft configurations may vary.

In operation of turbine engine 10, incoming airflow FI enters inlet 22 and divides into core flow FC and bypass flow FB, downstream of fan 12. Core flow FC propagates along the core flowpath through compressor section 16, combustor 18 and turbine section 20, and bypass flow FB propagates along the bypass flowpath through bypass duct 14. LPC section 30 and HPC section 32 of compressor 16 are utilized to compress incoming air for combustor 18, where fuel is introduced, mixed with air and ignited to produce hot combustion gas. Depending on embodiment, fan 12 also provides some degree of compression (or pre-compression) to core flow FC, and LPC section 30 may be omitted. Alternatively, an additional intermediate spool is included, for example in a three-spool turboprop or turbofan configuration.

Combustion gas exits combustor 18 and enters HPT section 38 of turbine 20, encountering turbine vanes 34 and turbine blades 36. Turbine vanes 34 turn and accelerate the flow, and turbine blades 36 generate lift for conversion to rotational energy via HPT shaft 50, driving HPC section 32 of compressor 16 via HPT shaft 50. Partially expanded combustion gas transitions from HPT section 38 to LPT section 40 thereby encountering turbine vanes 52 and turbine blades 54 driving LPC section 30 and fan 12 via LPT shaft 44. Vanes 52 are attached to casing 48. Exhaust flow exits LPT section 40 and turbine engine 10 via exhaust nozzle 24.

The thermodynamic efficiency of turbine engine 10 is tied to the overall pressure ratio, as defined between the delivery pressure at inlet 22 and the compressed air pressure entering combustor 18 from compressor section 16. In general, a higher pressure ratio offers increased efficiency and improved performance, including greater specific thrust. High pressure ratios also result in increased peak gas path temperatures, higher core pressure and greater flow rates, increasing thermal and mechanical stress on engine components.

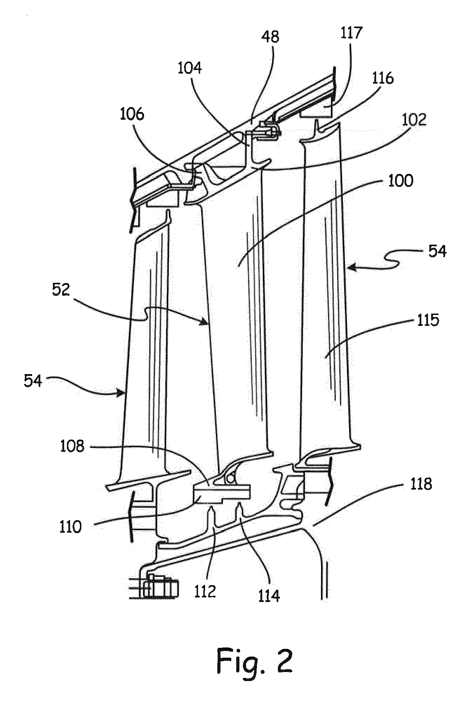

The present disclosure entails fabrication and use of lightweight hybrid composite structures comprising gamma TiAl intermetallic alloy components joined to nickel base superalloy or other metallic components wherein the intermetallic alloy may be placed in the high temperature gas path and the superalloy components may act as mounting and connection features where high strength and ductility are required for component lifetime. In one exemplary embodiment, the lightweight hybrid structures may be in a compressor. In another embodiment, the hybrid structures may be in the back end of the compressor. One non-limiting example of the present disclosure is vane 52 illustrated in FIG. 2.

FIG. 2 is a view of LPT vane 52 and adjacent LPT blades 54. LPT vane 52 comprises airfoil 100, outer platform 102, hooks 104 and 106, inner platform 108, and seal 110. Knife edges 112 and 114 on rotor 118 interact with seal 110 on vane 52. Knife edge 116 on blade 54 interacts with seal 117 on casing 48. During operation, vane 52 is stationary and attached to casing 48 by hooks (104, 106). Blade 54 is attached to rotor 118, which is attached to LPT shaft 44 (FIG. 1) and is part of the low pressure spool as mentioned above. Rotor 118 includes movable airfoil 115. During operation, fixed vane 52 diverts the hot gas working fluid to impinge upon airfoil 115 in blade 54 to cause rotation and extract energy from the hot gas working fluid of engine 10.

Vane 52 may be cast in an existing commercial embodiment from a nickel base superalloy. In embodiments disclosed herein, airfoil 100 in vane 52 is replaced with a lighter, high temperature material to take advantage of the weight reduction and increase in efficiency with minimal or no expense to engine performance. In particular, airfoil 100 is formed with the intermetallic compound alloy, gamma TiAl. Gamma TiAl alloys have a density of about one-half to two-thirds of that of nickel base superalloys and melting points at or higher than the superalloys themselves. Compared to superalloys however, gamma TiAl intermetallic alloys have lower fracture toughness than nickel base superalloys as well as anomalous short crack growth susceptibility and higher fatigue crack growth rates than nickel base superalloys (Kothari et al., Powder Metallugry, 50, 21-27 (2007)).

In one exemplary embodiment, airfoil 100 is formed from gamma TiAl intermetallic alloy while outer platform 102 including hooks (104, 106) and inner platform 108 are formed from a nickel base superalloy or another metallic alloy. In accordance with various exemplary embodiments, the nickel base superalloy or other metallic alloy components (e.g., hooks 104, 106) are joined to the gamma TiAl components (e.g., airfoil 100) by transient liquid phase bonds (further discussed below) to form a hybrid structure of two material types having joints between the two materials in a number of predetermined positions, such as at regions of low stress or vibration.

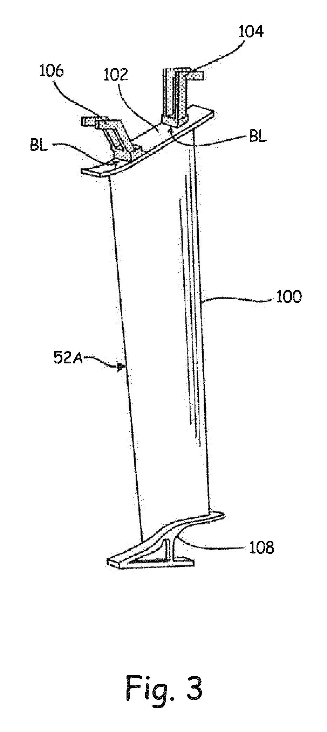

Examples of such different joining geometries of the disclosure are shown in FIGS. 3-5B. FIG. 3 is a perspective view of composite hybrid vane 52A according to one embodiment. In this non-limiting example, everything except hooks 104 and 106 may be formed from gamma TiAl. Hooks 104 and 106, as indicated by the shading, may be nickel base superalloys or other metallic alloys and may be connected to platform 102 by bond lines indicated by arrows BL.

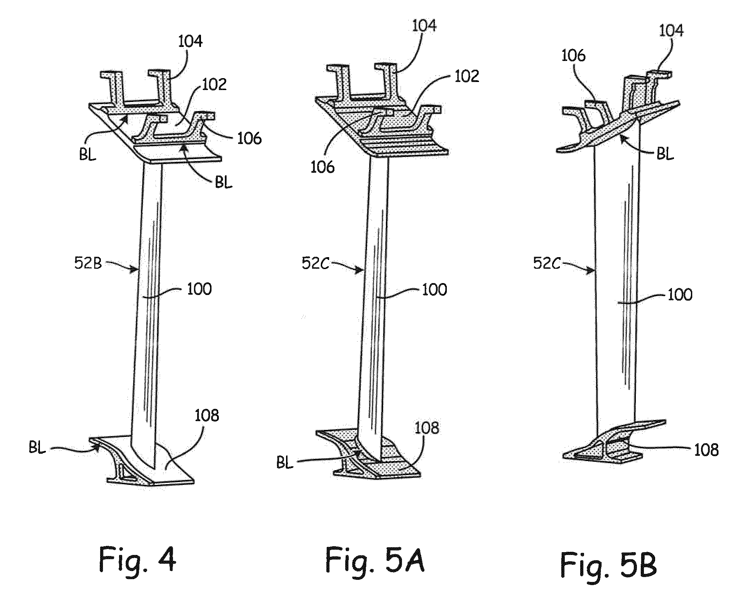

In another non-limiting embodiment shown in FIG. 4, hybrid vane 52B has nickel base superalloy or other metallic alloy hooks 104, 106 as shown by shading may be attached to outer platform 102 along bond lines indicated by arrows BL. In this example, a small portion of inner platform 108 may also be a nickel base superalloy or other metallic alloy and attached to the bottom of inner platform 108 along a bond line as indicated by arrow BL.

In another non-limiting embodiment shown in FIG. 5A and FIG. 5B, hybrid vane 52C has hooks 104, 106 and outer platform 102 that may be formed in a single piece from a nickel base superalloy or other metallic alloy and joined to airfoil 100 along bond lines BL, indicated by arrows BL by transient liquid phase bonding. Inner platform 108 may also be formed from nickel base superalloy and may be joined to airfoil 100 by transient liquid phase bonding along a bond line as shown by arrow BL.

As shown by the non-limiting embodiments of FIGS. 3-5B, use of hybrid structures of the disclosure may offer significant benefits. Insertion of high temperature lightweight intermetallic gamma TiAl alloy airfoils may result in up to 50% weight savings and resulting engine efficiency. Structural components that experience dynamic loading cycles during operation may be formed from materials, such as nickel base superalloys or other metallic alloys that may withstand large cyclic stresses and frictional loading occurring at specific positions in a component. The ability to tailor the design and place the bond position at predetermined positions of low stress or vibration can extend the lifetime of the component. The bond positions may be determined by computer modeling or by experiment, for example.

Transient liquid phase bonding is an attachment method that is reviewed in "Overview of Transient Liquid Phase and Partial Transient Liquid Phase Bonding" by Cook III and Sorenson in J.Mater. Sci. (2011) 46: 5305-5323 The TLP process joins materials by using an interlayer material at the joint. When the joint is heated, the interlayer material melts and elemental constituents of the molten interlayer diffuse into the materials on one or both sides of the joint resulting in isothermal solidification. A notable aspect of this process is that the bond has a higher melting point than the bonding temperature.

Following bonding, the process may include a homogenization anneal at a suitable temperature to decrease compositional gradients and to further strengthen the bond.

Bonding materials can be in a number of forms including foils, powders, pastes, slurries, and other suitable materials known in the art. Fixturing a part during TLP bonding applies pressure to the joint and maintains alignment of the parts. TLP bonding can be performed under a vacuum, inert or other atmosphere. Elemental constituents of TLP bonding materials for bonding gamma TiAl intermetallic alloys to nickel base superalloys may include Ti, Cu, Ni, Fe, Al, Cr, Nb, gamma TiAl alloy, Si, P, B, and other suitable superalloys.

The present disclosure describes a lightweight hybrid turbine component such as the exemplary embodiment shown in FIG. 3. The FIG. 3 hybrid vane 52A comprises airfoil 100, outer platform 102, hooks 104 and 106 and inner platform 108. Airfoil 100, outer platform 102 and inner platform 108 are all formed from lightweight gamma TiAl intermetallic alloy thereby significantly reducing the weight of hybrid vane 52A over that of an equivalent superalloy vane. Hooks 104 and 106 are formed from a nickel base superalloy that can withstand the impact and vibrational stresses associated with the service environment. Superalloy hooks 104 and 106 are attached to platform 102 along bond lines indicated by arrows BL. Bond lines BL are in positions of low stress and vibration that can extend the service life of vane 52A. Hooks 104 and 106 are attached to platform 102 by a transient liquid phase (TLP) bond during which, prior to the bonding process, the mating surfaces along the bond lines are coated with a TLP bonding material.

The separate parts, in this case, superalloy hooks 104 and 106, gamma TiAl airfoil 100, platform 102, and platform 108 are clamped in place in a fixture and heated in order to melt the bonding material. During the isothermal heat treatment, melting point depressant elements defuse out of the mating surfaces and the molten bond solidifies to form a strong bond. The hybrid vane, with an airfoil than withstand the thermal stress in the hot gas bath and with mounting fixtures that can withstand the operational stresses during service, offers a significant increase in efficiency due to lower weight.

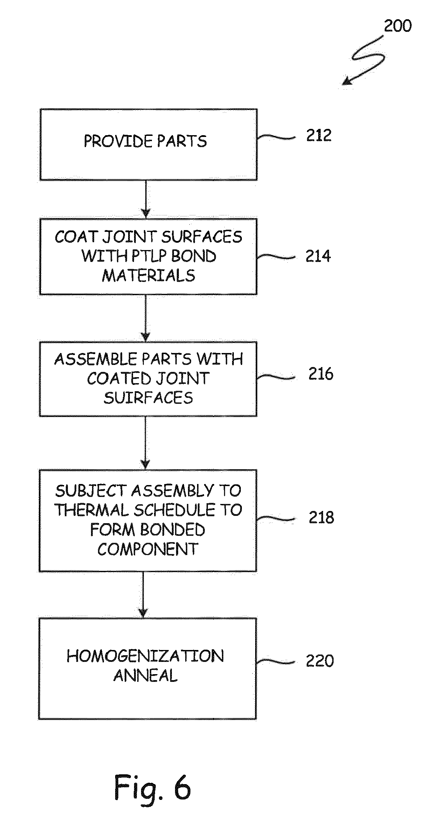

Method 200 of forming a hybrid gamma titanium aluminide alloy/nickel base superalloy composite turbine component of the present disclosure is shown in FIG. 6. At block 212, the individual parts of the component are provided. In the non-limiting example discussed herein, the example component may be turbine vane 52 depicted in FIG. 2. The individual parts may be airfoil 100, outer platform 102, hooks 104 and 106, and inner platform 108. Airfoil 100 may be formed from gamma intermetallic TiAl alloy. The other parts may be formed from a nickel base superalloy or other metallic alloys.

At block 214, prior to their joining, surfaces of each of the parts may be coated with a transient liquid phase (TLP) bonding material. The TLP bonding material may be a combination of materials in powder, paste, slurry, foil or other suitable forms that will coat the joint surfaces of each part. In exemplary embodiments, the joint positions in the hybrid component may be placed at predetermined positions of choice that may experience, for instance, low stress or vibration that may limit fatigue in those regions and thereby extend service life. The joining materials may include alloying elements common to both gamma TiAl alloys and nickel base superalloys. Examples include, but are not limited to, Ti, Cu, Ni, Fe, Al, Cr, Nb, Si, P, B, and others known in the art.

At block 216, the individual parts with coated joint surfaces are assembled. Assembly may be performed with the assistance of fixturing, whereby each part is exactly positioned and clamped in place. A preload may be added to each joint to improve the integrity of each resulting bond.

At block 218, the fixtured assembly may be subjected to a thermal schedule that melts the bonding material to initiate the transient liquid phase (TLP) bonding process. The assembly may be heated in a vacuum, inert, or other atmosphere to ensure the integrity of each bond. During the TLP process, elements in the bonding material isothermally diffuse into the gamma TiAl intermetallic alloy and/or nickel base superalloy parts. As the diffusion progresses, the melting point of the bonding mixture increases until the bond solidifies forming a continuous joint with the required mechanical integrity required for the application.

At block 220, the hybrid component may be given a homogenization anneal to strengthen the bond and to eliminate residual compositional gradients remaining in the hybrid component (e.g., vane 52).

### Discussion of Possible Embodiments

The following are non-exclusive descriptions of possible embodiments of the present invention.

A hybrid component for a turbine engine having a casing, may include: a first part including a gamma TiAl intermetallic alloy; and a second part which includes nickel, a nickel base, a cobalt base, an iron base superalloy, or mixtures thereof, wherein the second part is coupled to and configured to attach the first part to the casing of the engine.

The hybrid component of the preceding paragraph can optionally include, additionally and/or alternatively any, one or more of the following features, configurations and/or additional components:
A first part may be a vane or blade.
A second part may include a hook or platform.
A second part may include nickel.

A transient liquid phase (TLP) bond may be between the first and second parts along a bond line a predetermined joint position.

The predetermined joint position may be a low stress or low vibration position.

The bond may include an isothermally solidified bonding material.

The bonding material may include at least one of Ti, Cu, Ni, Fe, Al, Cr, Nb, gamma TiAl alloy, P, B, and mixtures thereof in a powder, paste, slurry or foil form, or mixtures thereof.

A hybrid component for a turbine engine may include an intermetallic airfoil with at least one metal attachment feature.

The airfoil may be a vane.

The intermetallic alloy may be gamma TiAl.

At least one metal attachment may include a material of at least one of nickel, a nickel base, a cobalt base, an iron base superalloy or mixtures thereof.

The airfoil may be bonded to the metal attachment features at a joint position of low stress or low vibration.

The airfoil may be bonded to the metal attachment features by transient liquid phase (TLP) bonding. The TLP bonding material may include at least one of Ti, Cu, Ni, Fe, Al, Cr, Nb, P, B, and mixtures thereof in a powder, paste, slurry or foil form, or mixtures thereof.

A method forming a hybrid component for a turbine engine may include: forming an intermetallic airfoil which includes gamma TiAl: forming a plurality of metal hooks; and attaching the airfoil to the plurality of hooks.

The method of the preceding paragraph can optionally include, additionally and/or alternatively any, one or more of the following features, configurations and/or additional components:
The metal hooks may be nickel, nickel base, cobalt base, iron base superalloys, or mixtures thereof.

## Claims

1. A hybrid component (52; 54) for a turbine engine (10) having a casing (48), the hybrid component comprising:
a first part (100) including a gamma TiAl intermetallic alloy; and
a second part (102) which includes nickel, a nickel base, a cobalt base, an iron base superalloy, or mixtures thereof,
wherein the second part is coupled to and configured to attach the first part to the casing of the engine.

2. The hybrid component of claim 1, wherein the first part is a vane (52) or blade (54), and/or wherein the second part includes a hook (104, 106) or platform (102).

3. The hybrid component of any preceding claim, wherein the second part includes nickel.

4. The hybrid component of any preceding claim, further comprising a transient liquid phase (TLP) bond between the first and second parts along a bond line at a predetermined joint position.

5. The hybrid component of claim 4, wherein the predetermined joint position is a low stress or low vibration position.

6. The hybrid component of claim 4, wherein the bond includes an isothermally solidified bonding material, preferably wherein the bonding material comprises at least one of Ti, Cu, Ni, Fe, Al, Cr, Nb, gamma TiAl alloy, P, B, and mixtures thereof in a powder, paste, slurry or foil form, or mixtures thereof.

7. A hybrid component (52, 54) for a turbine engine (10), comprising:
an intermetallic alloy airfoil with at least one metal attachment feature.

8. The hybrid component of claim 7, wherein the airfoil is a vane (52).

9. The hybrid component of claim 7 or 8, wherein the intermetallic alloy is gamma TiAl.

10. The hybrid component of claim 7, 8, or 9 wherein the at least one metal attachment feature (104, 106) includes a material of at least one of nickel, a nickel base, a cobalt base, an iron base superalloy, or mixtures thereof.

11. The hybrid component of any of claims 7 to 10, wherein the airfoil is bonded to the metal attachment feature at a joint position of low stress or low vibration.

12. The hybrid component of claim 11, wherein the airfoil is bonded to the metal attachment feature by transient liquid phase (TLP) bonding

13. The hybrid component of claim 12, wherein the TLP bonding material comprises at least one of Ti, Cu, Ni, Fe, Al, Cr, Nb, gamma TiAl alloy, P and B, and mixtures thereof in a powder, paste, slurry or foil form, or mixtures thereof.

14. A method of forming a hybrid component (52; 54) for a turbine engine (10), comprising:
forming an intermetallic alloy airfoil (100) which includes gamma TiAl;
forming a plurality of metal hooks (104, 106); and
attaching the airfoil to the plurality of hooks.

15. The method of claim 14, wherein the metal hooks are nickel base, cobalt base, or iron base superalloys, or mixtures thereof, or nickel; preferably
wherein attaching the airfoil to the plurality of hooks comprises transient liquid phase (TLP) bonding wherein bonding material at a bonding surface isothermally solidifies to form a solid connection between the airfoil and metal hooks along the bonding surface during a heat treatment; and/or preferably
wherein the hybrid component is in a turbine (10).
